# EUROPEAN PATENT APPLICATION

(11) **EP 1 205 857 A2**
(43) Date of publication of application: **15.05.2002**
(21) Application number: 01306185.8
(22) Date of filing: 18.07.2001
(51) Int. Cl.: G06F 17/30

(54) **Apparatus for retrieving data**

(30) Priority: 10.11.2000 JP 2000349321
(71) Applicant: Hitachi Ltd., Tokyo (JP)
(72) Inventor: Shinoda, Takashi, c/o Hitachi Ltd. I.P.G., of New, Chiyoda-ku, Tokyo 100-8220 (JP)
(74) Representative: Hackney, Nigel John

(57) **Abstract**

In a data retrieving apparatus (100), when the contents information is collected by a program called "robot", a characteristic value of collected contents data is calculated and stored in a database (111) together with the contents information such as addresses or the like. When data retrieval processing is carried out, an address of the contents as a retrieval result is provided to the user and other addresses equal in characteristic value to the first-mentioned contents are also offered to the user as the contents which are considered to be identical in content with the first-mentioned contents.

## Description

The present invention relates to a data retrieving apparatus for retrieving digital data mainly used in a computer, and particularly to an apparatus for retrieving contents data formed as homepages which can be read on the Internet.

Recently, WWW (World Wide Web) systems using open networks such as Internet or the like are used widely and practically. A WWW system is constituted by WWW servers providing various kinds of information, and WWW clients connected to the WWW servers through a network so as to receive the information from the WWW servers. Each of the WWW servers lays its own homepage open to the public so that users can address a so-called URL (Uniform Resource Locater) to browser programs of the WWW clients so as to read homepages through the browsers by accessing to the homepages correspondingly.

Further, there are WWW servers offering retrieval services of homepages in response to requests of the users who want to read only homepages which are identical with a certain condition out of a large number of homepages.

JP-A-10-091638 discloses a mode for realizing such a retrieval service method. This mode uses a program so-called "robot" to automatically collect and retrieve information of addresses of the contents on the network, keywords included in the contents, or the like.

JP-A-2000-207418 discloses the method to retrieve a candidate of the contents in a new destination address, when the contents to be read have been moved to the new destination address.

JP-A-10-091638 discloses some problems peculiar to the retrieval system using the "robot". For example, the quantity of contents on the Internet is too large, so that it takes a long time to collect all the contents information. About this point, sometimes, it takes several weeks or even several months to reflect the fact of the contents which have been deleted already, or the fact of the contents which have been moved to a new destination address on the database of the retrieval system. Accordingly, when a user wants to access to an address obtained as the retrieval result from the retrieval system, there may occur such a case that the address does not exist any more in the retrieved address so that the user cannot access to the target contents consequently.

Further, as the method disclosed in JP-A 2000-207418, there is a retrieval method by extracting keywords of the contents. However, similar to the above-mentioned known methods, because many unrelated contents are also extracted by the retrieval result processing on the basis of keyword, there is a problem that it is not easy to find the indeed requested contents out of the extracted contents.

Preferably, an object of the present invention is to provide a technique by which target contents can be accessed as properly as possible even when the contents have been deleted from the address which is still registered in a database of a retrieval system, or even when the contents have been moved to a new address.

The present invention is to provide a data retrieving apparatus for retrieving digital data which is mainly used in a computer, which is identical in content with certain data, and which is located in a different place.

According to the present invention, when contents information is collected by a program called "robot" in the data retrieving apparatus, characteristic values of the respective collected contents data, for example, hash values calculated in accordance with a hash function are calculated so that the hash values are stored correspondingly in the database together with the contents information such as addresses or the like. When data retrieving processing is carried out, not only is the address of the contents as a retrieval result offered to the user but also the address of the contents which are equal in characteristic value to the result contents can be also offered to the user as the contents which are considered to be identical in content with the result contents. This processing is made on the assumption that there is a high possibility that the contents having an equal characteristic value are also identical in content with each other.

As described above, according to the present invention, even when the contents have been deleted from the address which is still registered in the database of the retrieval system or even when the contents have been moved to a new address, if contents identical in content with the target contents exist on the network, there is a higher possibility that such an address of the contents can be offered to the user so that the user can read the target contents.

Further, according to the present invention, the contents which are identical in content with the target contents but different in address can be retrieved, so that it is possible to early find illegally copied contents which have been laid open to the public.

### BRIEF DESCRIPTION OF THE DRAWINGS

Fig. 1 is a diagram showing a schematic configuration of a data retrieving system according to the present invention;
Fig. 2 is a table showing a data configuration of a contents information management DB;
Fig. 3 is a flow chart showing a processing procedure of a contents information collecting portion;
Fig. 4 is a flow chart showing a processing procedure of a contents retrieving portion; and
Fig. 5 is a view showing an example of a data retrieved screen.

### DETAILED DESCRIPTION OF THE EMBODIMENT

An embodiment of the present invention will be described below with reference to the drawings.

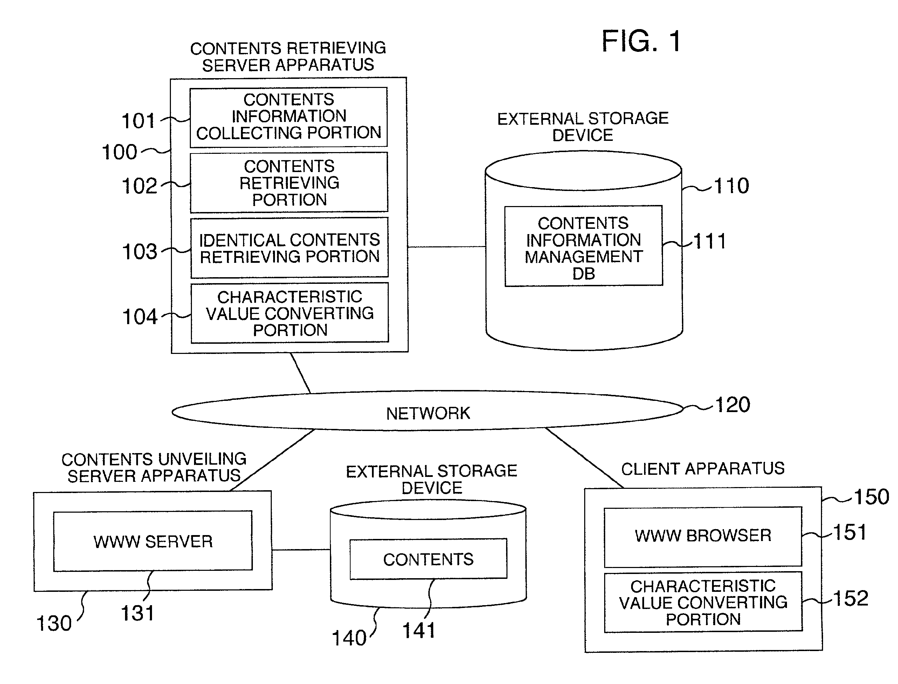

Fig. 1 is a diagram showing a schematic configuration of a data retrieving system according to the embodiment. As shown in Fig. 1, a contents retrieving server apparatus 100 for retrieving contents, a contents unveiling server apparatus 130 for managing contents and laying the contents open to the public, and a client apparatus 150 for reading contents data are connected to a network 120 such as the Internet or the like. Assume that those apparatuses can perform data communication with one another through the network 120. Further, there may be a plurality of units for each of those apparatuses on the network.

The contents retrieving server apparatus 100 is constituted by a contents information collecting portion 101, a contents retrieving portion 102, an identical contents retrieving portion 103, a characteristic value converting portion 104 and an external storage device 110.

The contents information collecting portion 101 collects contents data belonging to the contents unveiling server apparatus 130 connected to the network 120.

The contents retrieving portion 102 retrieves contents in response to the request from the client apparatus 150, and feeds the retrieval result back to the client apparatus 150.

The identical contents retrieving portion 103 retrieves other contents identical in content with certain contents from a contents information management DB 111, and feeds the retrieval result back to the client apparatus 150.

The characteristic value converting portion 104 employs a hash function or the like to calculate a characteristic value such as a hash value or the like from certain contents data. Here, the characteristic value converting portion 104 may obtain characteristic values not always from the whole contents but from a predetermined part of the whole contents.

A program which is designed for making the contents retrieving server apparatus 100 function as the contents information collecting portion 101, the contents retrieving portion 102, the identical contents retrieving portion 103 and the characteristic value converting portion 104 is loaded into a memory in use, after being recorded in a recording medium such as a CD-ROM or stored in a magnetic disk or the like. Incidentally, the medium for storing the program may be a medium other than the CD-ROM.

The external storage device 110 stores various kinds of processing programs and data in advance, and includes the contents information management DB 111.

The contents information management DB 111 is a database for saving and managing data of contents collected by the contents information collecting portion 101. In the contents information management DB 111, contents characteristic values are stored as will be described later.

The contents unveiling server apparatus 130 has a WWW server 131 and an external storage device 140.

The WWW server program 131 is a program for laying contents data open to the public in response to the request from the client apparatus.

In external storage device 140, various kinds of processing programs, and contents 141 showing contents of the pages laid open in response to the request from the client apparatus are stored.

In the client apparatus 150, a WWW browser 151 is mounted for receiving and displaying contents data and various processing results from the server apparatuses.

Further, on the client side, there is provided a characteristic value converting portion 152 for carrying out a conversion process the same as that conducted in the characteristic value converting portion 104 provided in the retrieval server 100. In this arrangement, processing can be performed such that a characteristic value for the contents to which the user tries to access is calculated on the client side, and the thus obtained characteristic value is transmitted to the retrieval server 100 so that retrieval is made on the contents information management DB 111. Alternatively, a system may be provided with two characteristic value converting portions so that a characteristic value converting portion 104 is exclusively used as a converting portion when data is inputted to the contents information management DB 111 while a characteristic value converting portion 152 serves as a converting process portion when the data is transmitted to the retrieving sever apparatus 100. In the system having the two characteristic value converting portions, the method to perform conversion process is the same. Fig. 1 shows the embodiment relating to the data retrieving system in this case.

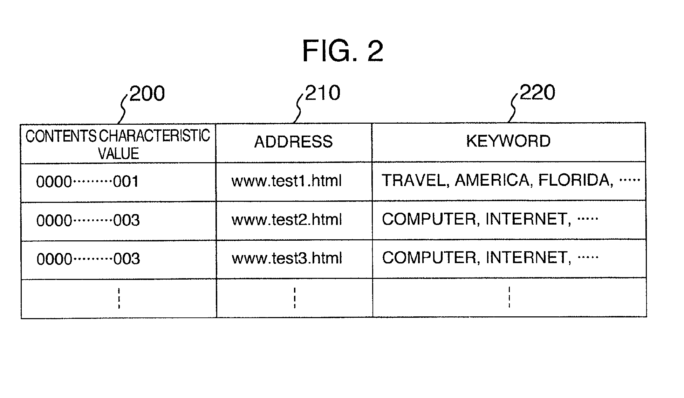

Fig. 2 is a table showing a data configuration of the contents information management DB 111.

The contents information management DB 111 is constituted by contents characteristic values 200, addresses 210, and keywords 220.

The contents characteristic values 200 are values or the like which are calculated from the contents data by employing a unidirectional function. The characteristic values are the values showing characteristics of the contents data. Examples of the characteristic values may include hash values calculated by use of a hash function or the like. Preferably, the contents characteristic values are the values each of which can guarantee the identity of content of the contents but the data quantity of which are smaller than that of the contents.

Here, each of the contents characteristic values 200 may be obtained by calculating a characteristic value from the whole contents data. Alternatively, a part of the data such as a range of data enclosed by a specific kind of tag in HTML (Hyper Text Markup Language) may be the subject to be calculated. For example, a hash value for the contents excluding a variable display content such as date, time, access account, or the like, may be taken in advance. In such a manner, when the contents characteristic values are compared with one another, unequalness in characteristic value due to date, time or the like may be not necessarily taken into consideration. On condition that display such as date, time, or the like, is performed by another function or an external program, the source program per se remains unchanged regardless of the display content. Accordingly, if the source program of the contents are the subjects for characteristic value calculation, the above-mentioned variation in characteristic value due to time change, or the like may not be necessarily taken into consideration.

In addition, not only the characteristic values of the contents per se, but also characteristic values of object data such as images attached to the first-mentioned contents, or characteristic values of other contents linked with the first-mentioned contents may be stored either all in the database or as a value obtained by summing up those characteristic values.

Each of the addresses 210 is an address such as a URL, or the like, widely used as means to show a location of the contents on the Internet so as to show the place where the contents exist.

Each of the keywords 220 is constituted by a set of keywords contained in each of the contents for use in contents retrieval processing.

Incidentally, the configuration of the contents information management DB 111 is not limited to that mentioned above. For example, a data configuration may be made such that each record contains one keyword.

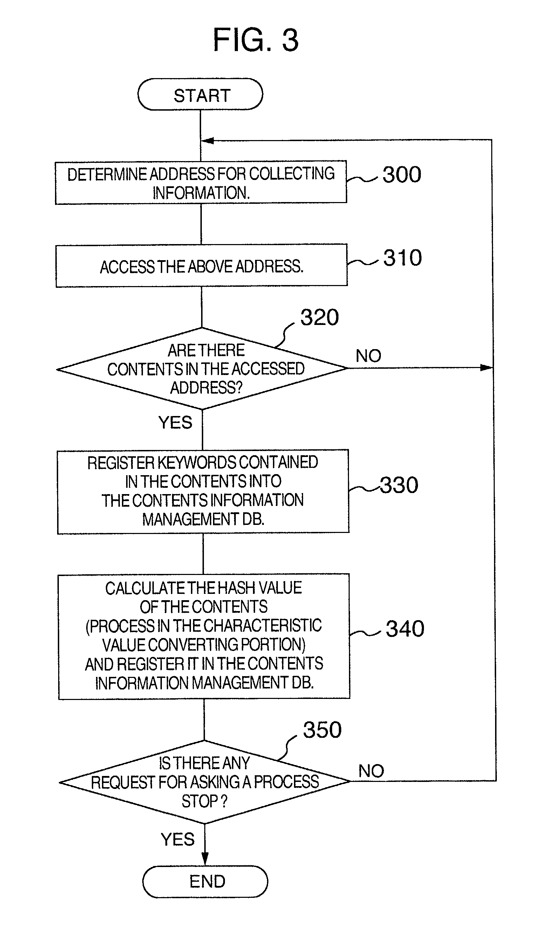

Fig. 3 is a chart showing a processing flow of the contents information collecting portion 101.

First, in Step 300, an address for collecting information is determined. Here, the method for determining the address is not specified but may be carried out in the order of character codes, in a random order, or the like. Alternatively, a range of addresses to be collected may be designated so as to limit the collection range.

Next, in Step 310, the address determined in Step 300 is accessed.

Next, in Step 320, if there are no contents in the accessed address, the process returns to Step 300. On the other hand, if there exist contents, the process goes to Step 330.

In Step 330, the keywords contained in the contents in the accessed address are registered in the keyword 220 in the contents information management DB 111.

Next, in Step 340, the characteristic value of the contents data in the accessed address is calculated in the characteristic value converting portion 104 and registered in the contents characteristic value 200 in the contents information management DB 111.

Next, in Step 350, if there is a request for asking a process stop, the process is terminated. On the other hand, if there is no request for asking a process stop, the process goes back to Step 300.

Incidentally, the method for collecting contents data is not limited to the above-mentioned method. All kinds of methods may be applied. For example, a method may be perform such that a process for taking keywords, a process for taking contents characteristic values may be performed by respective programs in parallel.

Further, when no contents exist in the accessed address, but there is a record corresponding to the address in the contents information management DB 111, processing to delete the record may be included.

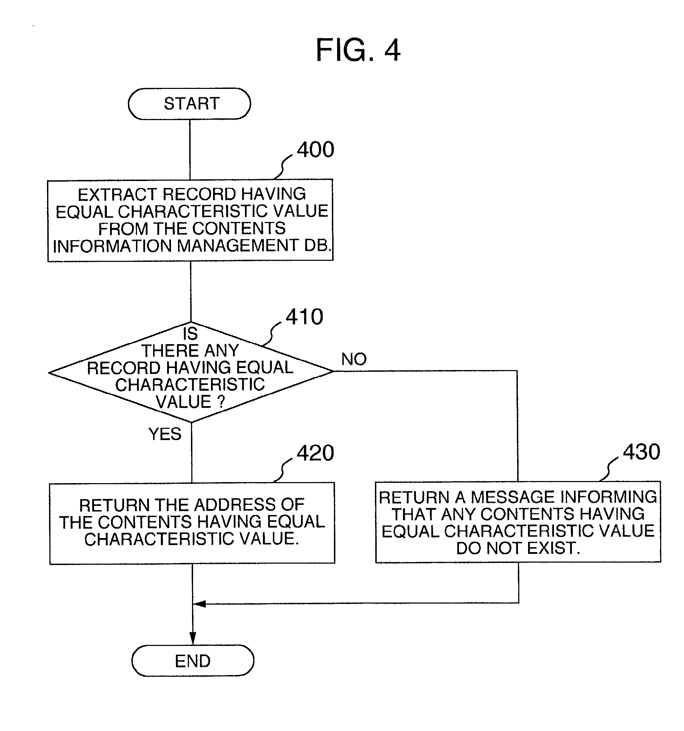

Fig. 4 is a chart showing a processing flow in the identical contents retrieving portion 103.

First, in Step 400, the subject contents for retrieving contents identical in content, and a record having the equal characteristic value are extracted from the contents information management DB 111. Incidentally, the characteristic value of the subject contents is taken from the contents information management DB 111 in advance. Alternatively, if the contents data actually exists, the characteristic value of the subject contents may be calculated and taken from the contents data.

Next, in Step 410, confirmation is made as to whether there is a record having the equal characteristic value in the contents information management DB 111. If there exists one record, the address of the contents having the equal characteristic value is returned in Step 420. On the other hand, if there is no record, a message informing that no contents having the equal characteristic value exist is returned in Step 430.

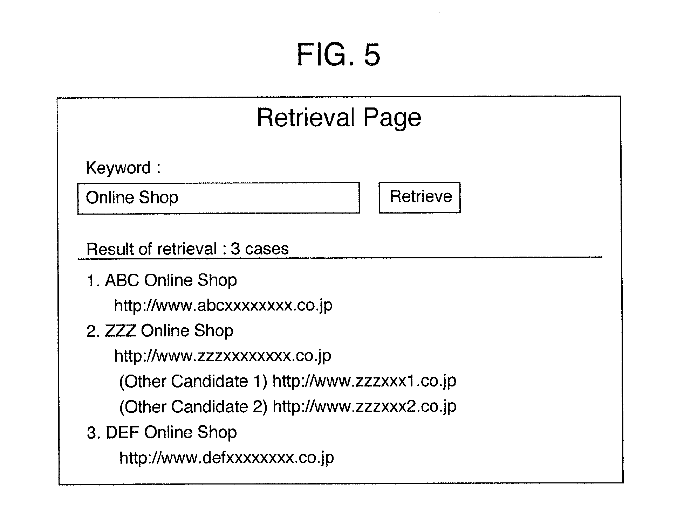

Fig. 5 is a view showing an example of a screen displaying a retrieval result according to the embodiment.

A user accesses to the retrieval homepage provided by the contents retrieving server apparatus 100 through the client apparatus 150, when the user wants to retrieve the contents on the network. Then, the user inputs the keyword for the contents that the user wants to search, and carries out retrieval processing. After the processing is completed, the result screen is displayed on the screen of the client apparatus 150, as shown in Fig. 5.

In this embodiment, not only are the addresses of the contents which are extracted as a result of keyword retrieval displayed, but also other contents are displayed as the candidates of the first-mentioned contents, if there are contents having characteristic values equal to those of the first-mentioned contents.

Accordingly, when the user tries to access to the address obtained as the retrieval result, but cannot access to the contents because of movement of the contents address, or other reasons, there is a higher possibility that the user can access to one of the address candidates so as to be able to access to the target contents.

Alternatively, either the user can directly input the characteristic value of the content data, or the user inputs the contents data so as to make the characteristic value converting portion 152 perform calculation of the characteristic value of the contents data for the user, so that the characteristic value of the content data may be transmitted directly to the server apparatus. On this occasion, only the contents that having the equal characteristic value to that of the contents that the user want to search, that is, only the contents having a high possibility to be identical in content with the contents that the user wants to search can be retrieved on the network.

Incidentally, the updated date of the contents may be stored in the contents information management DB 111. On this occasion, if the contents characteristic value stored this time is different from that stored before in the case where the characteristic value is calculated in the characteristic value converting portion 104 and then stored in the contents information management DB 111, conclusion is made that the content of the contents has been changed and it is conceived that the contents information collecting portion 101 had performed the process to store an updated date as the system date.

According to the present invention, in the case where the URLs of the homepages are changed on a large scale, for example, because of restructuring of government organizations, access by the user can be carried out easily.

Further, according to the present invention, contents which are considered to be identical in content but which are different in address can be retrieved easily. Accordingly, the illegally copied contents which have been laid open to the public can be found early. When explanation is made with reference to the embodiment of Fig. 1, the contents information probably illegally copied is inputted by the client apparatus 150, the characteristic value of the contents is obtained in the characteristic value converting portion 104, an address 210 of the contents having the characteristic value equal to the thus obtained characteristic value is extracted from the contents information management DB 111 by the contents retrieving portion 102, and the extracted address is fed back to the client apparatus 150. In such a manner, from the feedback of the address information, the user may grasp the illegal use condition of the providers or the like who have illegally copied the contents.

According to the present invention, even when the contents have been deleted from the address registered in the database of a retrieval system or moved to another address, the user still can access to the target contents.

Further, according to the present invention, the contents illegally copied and laid open to the public can be easily found.

## Claims

1. A data retrieving apparatus (100) for retrieving digital data comprising:
contents information collecting means (101) for collecting contents information;
characteristic value converting means (104) for converting said collected contents information into characteristic values (200) respectively;
contents information storage means (110) for storing said characteristic values of said contents and addresses (210) of said contents in correspondence therebetween;
contents retrieving portion (103) for retrieving said contents information storage means on the basis of inputted contents characteristic values; and
contents address output means for outputting said addresses of said contents corresponding to said characteristic values extracted in said retrieving portion.

2. A data retrieving server (100) for retrieving digital data comprising:
means (110) for storing characteristic values (200) of contents data and addresses (210) of said contents correspondingly in a database (111) for storing contents information.

3. A data retrieving method for retrieving digital data comprising:
a first step (340) of calculating each characteristic value (200) of contents data and storing said characteristic value in a database (111) as an item of contents information in a contents information collecting process; and
a second step (400) of extracting a record having a characteristic value equal to that of said contents data from said database for storing said contents information.

4. A data retrieving method according to Claim 3 wherein, in said first step, if a calculated characteristic value of said contents data is different from said characteristic value of said contents stored in said database on the condition that said contents information of said contents have been stored in said database already, a contents change date information is updated with a system time.

5. A recording medium (110) readable by a computer in which a program for realizing a digital data retrieving function is recorded, wherein a program for realizing a contents information collecting function for collecting contents information including characteristic values (200) of contents, and for realizing a contents retrieving function for retrieving contents information identical in content with certain contents data on the basis of said characteristic value is recorded.

6. A data retrieving system (100) for retrieving contents data comprising:
a contents information collecting portion (101) for collecting contents information;
means (104) for generating a characteristic value (200) of contents so that, by said characteristic value, identity of said contents can be recognized;
means (110) for storing said characteristic value of said contents;
means (152) for inputting a contents characteristic value; and
a contents retrieving portion (103) for retrieving said storage means, in which said contents characteristic value is stored, on the basis of the inputted contents characteristic value.

7. A data retrieving system (100) according to Claim 6, wherein said characteristic value is a resultant value when applying a unidirectional function to said contents.

8. A data retrieving system (100) according to Claim 7, wherein a subject of said characteristic value is a part of the whole contents.

9. A data retrieving system (100) for retrieving contents data comprising:
a contents information collecting portion (101) for collecting contents information;
means (104) for generating a characteristic value (200) of contents correspondingly to content of said contents;
means (110) for storing said characteristic value of said contents;
means (150) for inputting information concerning said contents; and
a contents retrieving portion (103) for retrieving said storage means, in which said characteristic value is stored, on the basis of a characteristic value corresponding to said inputted contents.

10. An information processing apparatus (100) for processing contents data comprising:
a contents information collecting portion (101) for collecting contents information;
means (104) for generating a characteristic value (200) of contents correspondingly to content of said contents;
means (110) for storing said characteristic value of said contents; and
a contents retrieving portion (103) for retrieving said storage means, in which said characteristic value is stored, on the basis of a characteristic value corresponding to inputted contents.
